Europäisches Patentamt

European Patent Office

Office européen des brevets

(19)

(11) **EP 1 055 174 B1**

(12) **FASCICULE DE BREVET EUROPEEN**

(45) Date de publication et mention
de la délivrance du brevet:
**28.04.2004 Bulletin 2004/18**

(21) Numéro de dépôt: **99958291.9**

(22) Date de dépôt: **10.12.1999**

(51) Int Cl.⁷: **G06F 11/20**, G06F 12/14

(86) Numéro de dépôt international:
**PCT/FR1999/003086**

(87) Numéro de publication internationale:
**WO 2000/036511 (22.06.2000 Gazette 2000/25)**

(54) **PROCEDE DE STOCKAGE ET D'EXPLOITATION D'UNITES D'INFORMATION DANS UN MODULE DE SECURITE, ET MODULE DE SECURITE ASSOCIE**

VERFAHREN ZUR SPEICHERUNG UND ZUM BETRIEB VON INFORMATIONSEINHEITEN IN EINEM SICHERHEITSMODUL, UND ZUGEHÖRIGES SICHERHEITSMODUL

METHOD FOR STORING AND OPERATING DATA UNITS IN A SECURITY MODULE AND ASSOCIATED SECURITY MODULE

(84) Etats contractants désignés:
**AT BE CH CY DE DK ES FI FR GB GR IE IT LI LU MC NL PT SE**

(30) Priorité: **11.12.1998 FR 9815650**

(43) Date de publication de la demande:
**29.11.2000 Bulletin 2000/48**

(73) Titulaire: **CP8 Technologies
78431 Louveciennes (FR)**

(72) Inventeurs:
• **DIENER, Sébastien
F-22410 Saint Quay Portrieux (FR)**
• **TRIERWEILER, Franz
F-78000 Versailles (FR)**

(74) Mandataire: **den Braber, Gerard Paul et al
AXALTO
Direction de la Propriété Intellectuelle
36-38 rue de la Princesse - BP 45
78431 Louveciennes Cedex (FR)**

(56) Documents cités:
EP-A- 0 568 438    WO-A-93/23806
US-A- 4 064 558    US-A- 5 081 675

**Description**

L'invention concerne un procédé de stockage et d'exploitation d'unités d'information dans un module de sécurité. Le terme "module de sécurité" doit être pris, soit dans son sens classique dans lequel il désigne un dispositif ayant vocation, dans un réseau de communication ou d'information, à être détenu par un organisme supervisant le réseau et à stocker de façon protégée des paramètres secrets et fondamentaux du réseau tels que des clés cryptographiques, soit comme désignant plus simplement un dispositif attribué à divers usagers du réseau et permettant à chacun d'eux d'avoir accès à celui-ci, ce dernier dispositif étant lui aussi susceptible de détenir des paramètres secrets. Le module de sécurité pourra prendre la forme d'un objet portatif du type carte à puce.

On sait qu'un fraudeur est susceptible de lire ou d'altérer des informations contenues dans des moyens de stockage d'information, notamment dans des mémoires de puces électroniques, en utilisant selon les cas un microscope électronique ou des moyens de production de rayonnements. Toutefois, pour être efficace, il lui faut non seulement accéder aux informations stockées, mais aussi identifier la fonction de ces informations dans le fonctionnement du module de sécurité.

Le document US-A-4,064,558 concerne le stockage d'information dans un mémoire en utilisant un procédé de brouillage des adresses physiques.

Le but principal de l'invention est de proposer un procédé de stockage d'informations permettant de rendre beaucoup plus difficile le repérage de la fonction attribuée à chacune des informations stockées.

L'invention, qui est définie dans les revendications indépendantes, concerne à cet effet un procédé de stockage d'informations dans des moyens de stockage d'information d'un module de sécurité, caractérisé en ce qu'il comprend les étapes consistant à :

- définir, dans les moyens de stockage, une première zone mémoire destinée à stocker des informations, accessibles en désignant des adresses logiques ;
- définir, dans les moyens de stockage, une seconde zone mémoire destinée à stocker des adresses physiques de ces informations définissant leur position dans la première zone mémoire, ces adresses physiques étant situées en une position qui est fonction des adresses logiques respectives des informations ;
- stocker les informations dans la première zone mémoire en une position qui est fonction de leurs adresses logiques respectives, et les adresses logiques de ces informations dans la seconde zone mémoire en une position qui est fonction de ces adresses logiques ; et
- permuter deux à deux les adresses logiques des unités d'information dans la seconde zone mémoire pour définir leurs adresses physiques et, après chaque permutation, permuter les deux unités d'information correspondantes dans la première zone mémoire, ou vice versa.

En variante, le procédé de stockage d'informations dans des moyens de stockage d'information d'un module de sécurité, est caractérisé en ce qu'il comprend les étapes consistant à :

- définir, dans les moyens de stockage, une première zone mémoire destinée à stocker des informations, accessibles en désignant des adresses logiques ;
- définir, dans les moyens de stockage, une seconde zone mémoire destinée à stocker des adresses physiques de ces informations définissant leur position dans la première zone mémoire, ces adresses physiques étant situées en une position qui est fonction des adresses logiques respectives des informations ;
- stocker aléatoirement dans la seconde zone mémoire les adresses logiques des informations pour définir des adresses physiques de ces informations ; et
- stocker les informations dans la première zone mémoire en une position qui est fonction de leurs adresses physiques respectives.

Ainsi, les informations se trouvent être dispersées dans les moyens de stockage, ce qui empêche en pratique leur repérage. Des perfectionnements, exposés dans le présent document, permettent en outre de protéger encore davantage les informations stockées.

L'invention concerne aussi un procédé d'exploitation et un module de sécurité correspondants.

D'autres détails et avantages de la présente invention apparaîtront au cours de la description suivante, d'un mode d'exécution préféré mais non limitatif, en regard des dessins annexés sur lesquels :

La figure 1 représente un dispositif de traitement de données coopérant avec un module de sécurité ;
La figure 2 représente une variante de module de sécurité ;
La figure 3 représente une mémoire volatile d'un module de sécurité , incorporant deux zones mémoire particulières, constituant respectivement une mémoire RAM sécurisée et une matrice de dispersion ;
La figure 4 représente la mémoire de la figure 3, après dispersion des unités d'information de la mémoire RAM sécurisée 41 ;
La figure 5 est une variante de la figure 4, où les unités d'information occupent chacune une seule cellule de mémoire ;
La figure 6 illustre le repérage des cellules à partir d'un pointeur ;
La figure 7 est un organigramme d'une procédure d'inversion de deux cellules de la matrice de dispersion ;

Les figures 8 à 10 représentent la mémoire volatile, lors de trois étapes successives de la procédure de la figure 7 ;

La figure 11 est un organigramme d'une procédure d'inversion de deux cellules de la mémoire RAM sécurisée, faisant suite à la procédure de la figure 7 ;

Les figures 12 à 14 représentent la mémoire volatile, lors de trois étapes successives de la procédure de la figure 11 ; et

La figure 15 est un organigramme d'une procédure de permutation multiple des cellules de la mémoire RAM sécurisée.

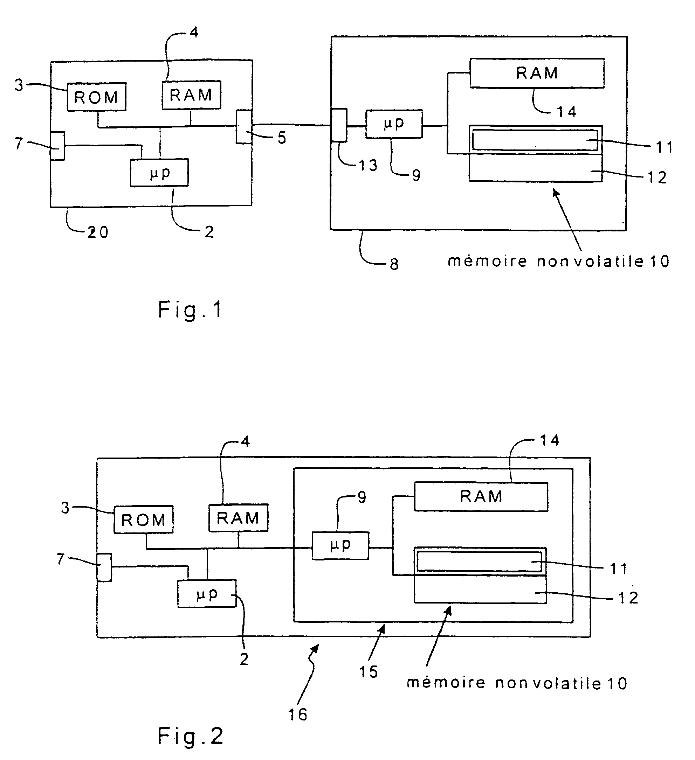

La figure 1 représente un dispositif de traitement de données 1 coopérant avec un objet portatif 8. Le dispositif de traitement de données comprend de façon connue en soi un microprocesseur 2 auquel sont reliés une mémoire ROM 3, et une mémoire RAM 4, des moyens 5 pour coopérer, avec ou sans contact physique, avec l'objet portatif 8, et une interface de transmission 7 permettant au dispositif de traitement de données de communiquer avec un réseau de communication de données. Le dispositif de traitement de données 1 peut en outre être équipé de moyens de stockage tels que des disquettes ou disques amovibles ou non, de moyens de saisie (tels qu'un clavier et/ou un dispositif de pointage du type souris) et de moyens d'affichage, ces différents moyens n'étant pas représentés sur la figure 1.

Le dispositif de traitement de données peut être constitué par tout appareil informatique installé sur un site privé ou public et apte à fournir des moyens de gestion de l'information ou de délivrance de divers biens ou services, cet appareil étant installé à demeure ou portable. Il peut notamment s'agir aussi d'un appareil dédié aux télécommunications.

Par ailleurs, l'objet portatif 8 porte une puce incluant des moyens de traitement de l'information 9, une mémoire non volatile 10, une mémoire volatile de travail RAM 14, et des moyens 13 pour coopérer avec le dispositif de traitement de données 1. Cette puce est agencée pour définir, dans la mémoire 10, une zone secrète 11 dans laquelle des informations une fois enregistrées, sont inaccessibles depuis l'extérieur de la puce mais seulement accessibles aux moyens de traitement 9, et une zone accessible 12 qui est rendue accessible depuis l'extérieur de la puce par le microprocesseur 9 pour une lecture et/ou une écriture d'informations. Chaque zone de la mémoire non volatile 10 peut comprendre une partie non modifiable ROM et une partie modifiable EPROM, EEPROM, ou constituée de mémoire RAM du type "flash" ou FRAM (cette dernière étant une mémoire RAM ferromagnétique), c'est-à-dire présentant les caractéristiques d'une mémoire EEPROM avec en outre des temps d'accès identiques à ceux d'une RAM classique.

En tant que puce, on pourra notamment utiliser un microprocesseur autoprogrammable à mémoire non volatile, tel que décrit dans le brevet américain n° 4.382.279 au nom de la Demanderesse. Comme indiqué en colonne 1, lignes 13-25 de ce brevet, le caractère autoprogrammable de la puce correspond à la possibilité pour un programme fi situé dans une mémoire ROM, de modifier un autre programme fj situé dans une mémoire programmable en un programme gj. Dans une variante, le microprocesseur de la puce est remplacé - ou tout du moins complété - par des circuits logiques implantés dans une puce à semi-conducteurs. En effet, de tels circuits sont aptes à effectuer des calculs, notamment d'authentification et de signature, grâce à de l'électronique câblée, et non microprogrammée. Ils peuvent notamment être de type ASIC (de l'anglais « Application Specific Integrated Circuit »).

Une variante de la figure 1 est illustrée sur la figure 2, où le dispositif de traitement de données 16 comprend, outre les éléments du dispositif de traitement de données 1 de la figure 1, ceux de l'objet portatif 8 disposés dans un module 15, les éléments communs aux deux figures 1,2 portant les mêmes références. Toutefois, les moyens de coopération 5,13 de la figure 1 sont remplacés par une liaison permanente entre le microprocesseur 2 et le microprocesseur 9.

Selon une variante de la figure 2, le dispositif de traitement de données est constitué par le module 15 de la figure 2 lui-même.

Selon l'invention, l'emplacement physique et la structure d'une information sensible dans une des mémoires de l'objet portatif 8 ou du module 15 évolue dans le temps de façon aléatoire. Soit S un ensemble de n cellules mémoire (c0, c1, c2, ....., c(n-1)) et f une fonction de dispersion propre à disperser le contenu d'une quelconque cellule $c_i$ depuis une adresse originelle jusqu'à une adresse dispersée $f(c_i)$. La fonction f vérifie les deux propriétés suivantes :

$$c_i \neq c_j \Rightarrow f(c_i) \neq f(c_j)$$

$$c_i \in S \Rightarrow f(c_i) \in S$$

(où $\in$ est un symbole signifiant « appartenant à »)

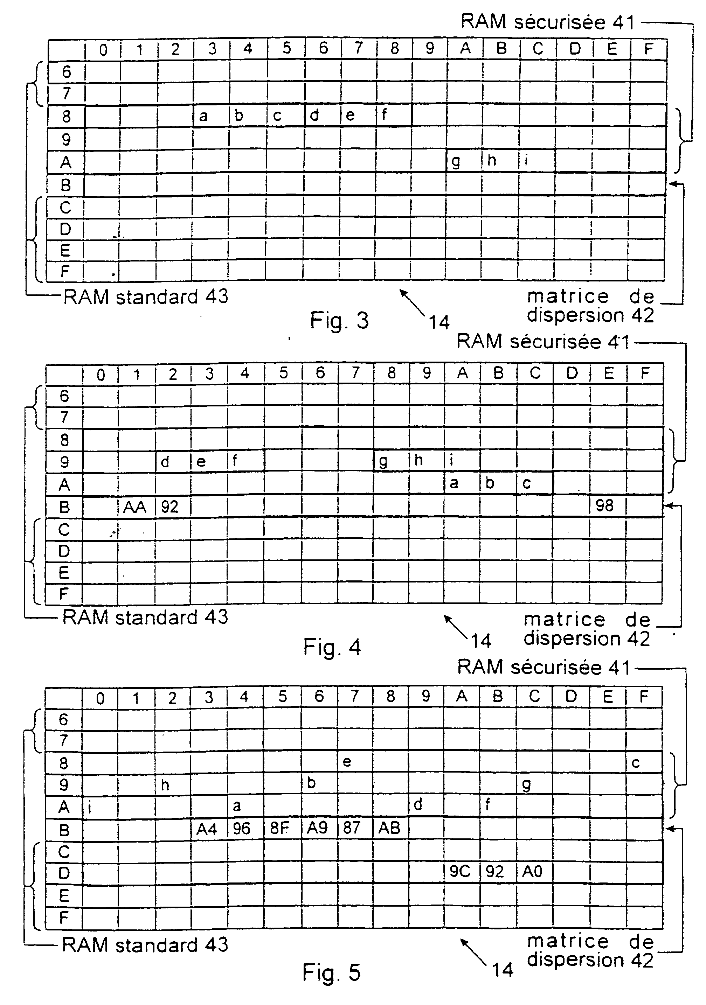

A titre d'exemple, est représentée sur la figure 3 la structure de la mémoire RAM 14 de l'objet portatif 8 ou du module 15. Elle comporte seize colonnes identifiées par les chiffres 0 à 9 puis par les lettres A à F (notation hexadécimale), ainsi que dix lignes identifiées par les chiffres 6 à 9 puis par les lettres A à F. Ces lignes et colonnes définissent cent soixante cellules repérées depuis la cellule 60 ( c'est-à-dire ligne 6, colonne 0) jusqu'à la cellule FF ( c'est-à-dire ligne F, colonne F). Chaque cellule stocke un octet binaire.

La mémoire RAM est décomposée en trois zones différentes. Une première zone 41 comprend les cellules 80 à AF et est nommée « mémoire RAM sécurisée » car son contenu va être sécurisé au moyen de la fonction f précitée : c'est dans cette zone que vont être stockées des informations sensibles à protéger. Une deuxième zone 42 comprend les cellules B0 à BF et est nommée « matrice de dispersion » car elle va être utilisée pour disperser les informations sensibles dans la mémoire RAM sécurisée. Enfin, une troisième zone 43, dite « mémoire RAM standard », comprend les cellules restantes, à savoir 60 à 7F et C0 à FF : elle est utilisée pour stocker les informations non sensibles. On notera que si, dans cet exemple, la mémoire RAM sécurisée et la matrice de dispersion sont composées de cellules contigües, elles pourraient, en variante, être composées de cellules non contigües.

Selon une forme de réalisation préférée, l'ensemble des informations stockées dans la mémoire RAM sécurisée est décomposé en plusieurs éléments appelés « unités d'information » comprenant chacune un même nombre déterminé de cellules. Dans l'exemple des figures 3 et 4, chaque unité d'information est entourée d'un trait fort et comprend trois cellules : on distingue par exemple l'unité d'information (a,b,c) dont le contenu est réparti dans les cellules d'adresse respective 83, 84, et 85, l'unité d'information (d,e,f), et l'unité d'information (g,h,i). L'ensemble des deux unités d'information (a,b,c) et (d,e,f) contigües constituent une information I complète telle que par exemple un mot de passe.

Quant à la matrice de dispersion 42, sa taille est fonction du nombre d'unités d'information pouvant être contenues dans la mémoire RAM sécurisée, puisqu'elle comprend, pour chaque unité d'information, une cellule particulière. Dans cet exemple, la mémoire RAM sécurisée comprend quarante-huit cellules, donc trois fois moins d'unités d'information , soit seize cellules B0 à BF. A chaque unité d'information est associée une cellule de la matrice de dispersion qui occupe, dans la zone mémoire considérée, un rang qui est une fonction particulière d'un rang occupé par l'unité d'information dans la mémoire RAM sécurisée 41. Dans cet exemple, la fonction est l'Identité, de sorte qu'à chaque unité d'information est associée une cellule de la matrice de dispersion qui occupe un même rang dans la zone mémoire considérée. Par exemple, à l'unité d'information (a,b,c) qui possède le rang 2 dans la mémoire RAM sécurisée est associée la cellule B1 qui possède le même rang dans la matrice de dispersion. De la même façon, l'unité d'information (d,e,f) est associée à la troisième cellule B2, et l'unité d'information (g,h,i) à la quinzième cellule BE. Mais, dans une variante, ladite fonction G peut être plus complexe, le rang $r_j$ de la cellule de la matrice de dispersion résultant d'une formule mathématique déterminée à partir du rang $r_i$ de l'unité d'information, selon la formule : $r_j = G(r_i)$. Un exemple est le suivant, dans le cas présent où seize rangs sont définis : $r_j = 17 - r_i$

Par définition, l'adresse d'une unité d'information est constituée par l'adresse de la première cellule qu'elle concerne: ainsi, l'adresse de l'unité d'information (a,b,c) de la figure 3 est 83, adresse de sa première cellule contenant l'information (a), tandis que l'adresse de l'unité d'information (g,h,i) est AA. Sur la figure 3, les unités d'information sont disposées à des adresses dites « adresses logiques », correspondant aux adresses qu'il faudra fournir à l'objet portatif pour qu'il traite ces unités d'information. Une procédure d'initialisation de la mémoire RAM 14 va maintenant être exposée, permettant de définir un état initial de rangement des unités d'information dans la mémoire RAM sécurisée 41. Dans une première phase, on remplit la matrice de dispersion 42 avec les adresses des unités d'information pouvant être stockées dans la mémoire RAM sécurisée 41, ces adresses étant tirées de façon aléatoire. Sur la figure 4, seulement trois de ces adresses sont représentées : AA, 92, et 98. Dans une deuxième phase, on rentre les unités d'information à stocker dans la mémoire RAM sécurisée 41, en fonction des adresses contenues dans la matrice de dispersion. Par exemple, on dispose l'unité d'information (a,b,c) à l'adresse contenue dans la cellule de la matrice de dispersion qui est associée à cette unité d'information : nous avons vu qu'il s'agissait de la cellule de rang 2. On dispose donc cette unité d'information à l'adresse AA. De la même façon, on range l'unité d'information (d,e,f) à l'adresse 92, et l'unité d'information (g,h,i) à l'adresse 98. Les adresses contenues dans la matrice de dispersion de la figure 4 sont dites « adresses physiques » car elles vont déterminer l'emplacement réel des unités d'information dans la mémoire RAM sécurisée 41. Sur la figure 4, la mémoire RAM sécurisée 41 est bien dans un état dit « sécurisé » puisque ses unités d'information ont été dispersées par rapport à l'état de la figure 3.

Une autre procédure d'initialisation de la mémoire RAM 14 va maintenant être exposée, en variante. Dans une première phase, on remplit la matrice de dispersion avec les adresses logiques des unités d'information. Ainsi, on met dans la première cellule l'adresse correspondant à la première unité d'information, soit 80. On met dans la deuxième cellule l'adresse logique correspondant à la deuxième unité d'information (a,b,c), soit 83, etc... Dans une deuxième phase, on remplit la mémoire RAM sécurisée 41 en fonction des adresses contenues dans la matrice de dispersion. Ainsi, et comme représenté sur la figure 3, on range l'unité d'information (a,b,c) au deuxième rang, l'unité d'information (d,e,f) au troisième rang, etc...Enfin, dans une troisième phase, on disperse deux par deux les unités d'information de la mémoire RAM sécurisée 41, en utilisant un procédé de permutation élémentaire décrit plus loin, jusqu'à ce que toutes les unités d'information aient été déplacées. En variante, on aurait pu intervertir les première et deuxième phases.

En fonctionnement, lorsque le microprocesseur exécutera un programme demandant l'accès à une information telle que l'information I précitée en désignant les adresses logiques 83 et 86, le microprocesseur consultera la matrice de dispersion 42. Il lira la première adresse physique écrite dans la cellule de rang 2, à savoir AA, puis il ira lire le contenu de l'unité d'information (a,b,c) à partir de cette adresse en mémoire RAM sécurisée. Puis il lira la seconde adresse physique écrite dans la cellule de rang 3, à savoir 92, puis il ira lire le contenu de l'unité d'information (d,e,f) à partir de cette adresse en mémoire RAM sécurisée : il aura alors reconstitué l'information I.

Selon la première forme de réalisation décrite ci-dessus, on disperse les information dans la mémoire RAM sécurisée en en modifiant la structure, c'est-à-dire l'ordre dans lequel sont disposées les unités d'informations dans les cellules composant l'information considérée, sans toutefois atteindre un degré maximal de dispersion. Au contraire, la variante de la figure 5 permet d'atteindre ce but. Dans cet exemple, chaque unité d'information correspond à une seule cellule de la mémoire RAM sécurisée 41 : il s'ensuit que la matrice de dispersion 44 comprend autant de cellules que la mémoire RAM sécurisée , à savoir quarante-huit, disposées entre les adresses B0 et DF.

Après écriture, dans la matrice de dispersion 44 de l'ensemble des adresses des unités d'information, puis modification aléatoire de ces adresses comme expliqué pour l'exemple précédent, on obtient la matrice de dispersion de la figure 5 où n'ont été représentées que les adresses physiques des neuf unités d'information (a à i) figurant dans la mémoire RAM sécurisée de la figure 3. Par exemple, l'adresse physique de l'unité d'information (b) est stockée dans la cellule de même rang que (b), à savoir le rang 5 : cette adresse est donc 96. De même, l'adresse physique de l'unité d'information (g) est située dans la cellule DA de la matrice de dispersion et vaut 9C.

Ensuite, le microprocesseur de la carte disperse les unités d'information (a à i) dans la mémoire RAM sécurisée, en fonction de l'adresse physique se trouvant dans la matrice de dispersion 44. Par exemple, l'unité d'information (c) est stockée dans la cellule de la mémoire RAM sécurisée 41 dont l'adresse est écrite dans la cellule B5 de la matrice de dispersion 44, à savoir l'adresse 8F. De même, l'unité d'information (f) a pour adresse physique la valeur AB écrite en cellule B8.

On constate que, dans ce deuxième exemple, l'information I formée des six informations élémentaires (a à f) se suivant de façon contiguë sur la figure 3, se trouve décomposée à tel point que les six informations (a à f) ne sont plus du tout contiguës. Naturellement, cette propriété est de nature à renforcer la sécurité, puisque le travail d'un fraudeur pour reconstituer le groupe d'informations (a à f) à partir de la mémoire RAM sécurisée , dans l'état où elle se trouve sur la figure 5, est encore plus compliqué qu'à partir de la mémoire RAM sécurisée de la figure 4. En règle générale, plus grand sera le nombre de cellules dans chaque unité d'information, plus faible sera la protection des informations sensibles.

Dans ce qui suit, l'adresse de chaque cellule de chaque zone de la mémoire RAM 14 est définie par un décalage déterminé par rapport à une origine constituée par l'adresse de la première cellule de la zone, ceci en raison d'un mode d'adressage particulier à un certain type de microprocesseurs. En variante, on pourrait naturellement définir une adresse absolue de chaque cellule, indépendamment des autres cellules, comme cela a été fait en relation avec les figures 3 à 5.

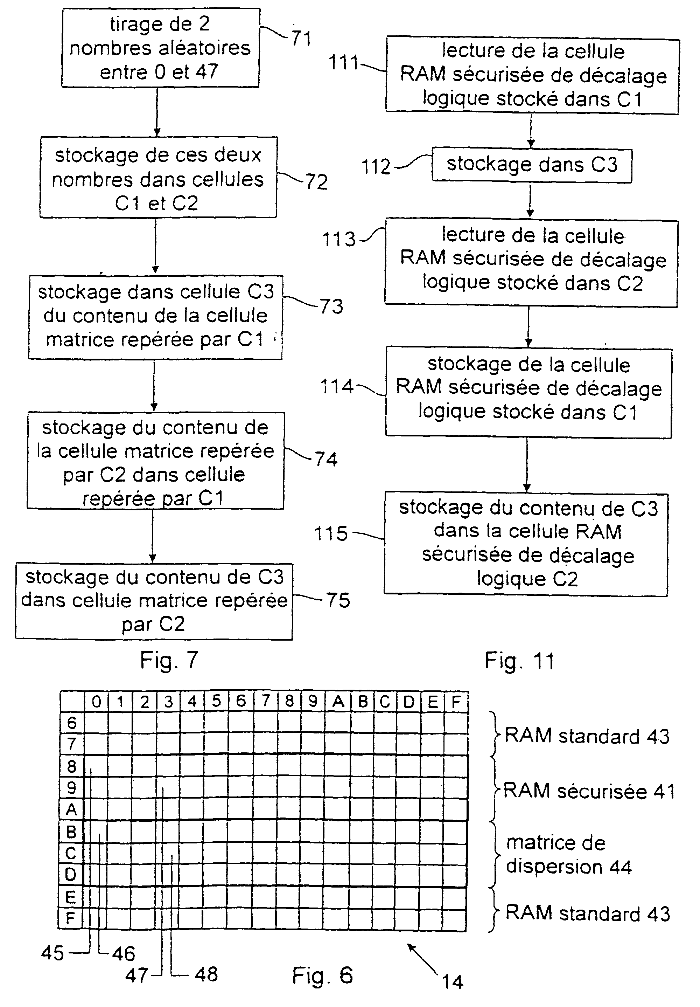

En référence à la figure 6, représentant à nouveau la structure de mémoire RAM de la figure 5, soit pRamSec un pointeur sélectionnant la première cellule 45 de la mémoire RAM sécurisée et pMat un pointeur sélectionnant la première cellule 46 de la matrice de dispersion. Une quelconque cellule de la matrice de dispersion contient une valeur représentant un décalage par rapport au pointeur pRamSec. Supposons que le microprocesseur ait à atteindre le contenu d'une cellule 47 de la mémoire RAM sécurisée dont il connaît l'adresse logique définie comme suit :

$$pRamSec + \text{décalage logique}$$

L'adresse physique correspondante est donnée par :

$$pRamSec + \text{décalage physique}$$

sachant que (décalage physique) est égal au contenu de la cellule 48 de la matrice de dispersion qui est homologue de la cellule 47, c'est-à-dire qui possède la même position matricielle ; la cellule 48 a l'adresse suivante : pMat + décalage logique.

On sait désormais déterminer l'adresse physique d'une cellule à adresser, à partir de son adresse logique : une lecture à cette adresse physique nous donne donc une valeur stockée à cette adresse.

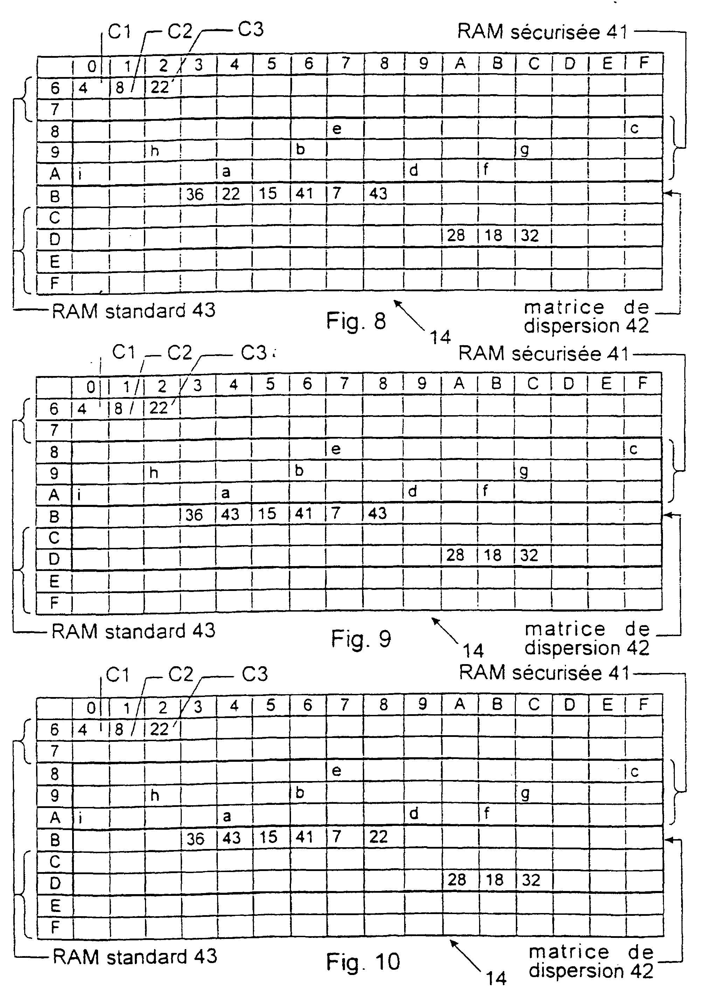

On décrit maintenant un procédé préféré pour effectuer une permutation élémentaire du contenu de deux cellules de la mémoire RAM sécurisée tirées au hasard, en regard des figures 7 à 10. Tout d'abord, et comme illustré par l'étape 71 de la figure 7, le microprocesseur 9 effectue un tirage aléatoire de deux nombres parmi un ensemble constitué par les adresses de toutes les cellules de la mémoire RAM sécurisée 41, définies par leur décalage logique : les quarante-huit cellules sont définies par un décalage logique ayant une valeur comprise entre 0 et 47. Par exemple, les valeurs 4 et 8 sont tirées : elles sont alors stockées dans deux cellules C1 et C2 de la mémoire RAM standard 43, selon l'étape 72 de la figure 7, le résultat étant représenté sur la figure 8. A l'étape 73, le contenu de la cellule de la matrice de dispersion 44 repérée par le décalage logique contenu dans la cellule C1 est stocké dans une cellule C3 de la mémoire RAM standard 43 : le décalage logique étant 4, l'adresse logique correspondante est pMat + 4, relative à la cellule B4 dont le contenu est 22. Le résultat est représenté sur la figure 8. Ensuite, à l'étape 74, on stocke le contenu de la cellule de la matrice de dispersion repérée par la cellule C2 dans la cellule repérée par la cellule C1 : le décalage logique contenu dans la cellule C2 est 8, qui désigne la cellule d'adresse pMat+8, soit la cellule B8 : son contenu 43 est disposé dans la cellule d'adresse pMat+4, soit la cellule B4. Le résultat est représenté sur la figure 9. Enfin, à l'étape 75, le contenu de la cellule C3 est stocké dans la cellule de la matrice de dispersion 44 repérée par le contenu de la cellule C2, à savoir la cellule d'adresse logique pMat+8, soit la cellule B8: le résultat est représenté sur la figure 10. On peut constater en observant les figures 8 et 10 que les valeurs de décalage logique 22 et 43 ont été interverties.

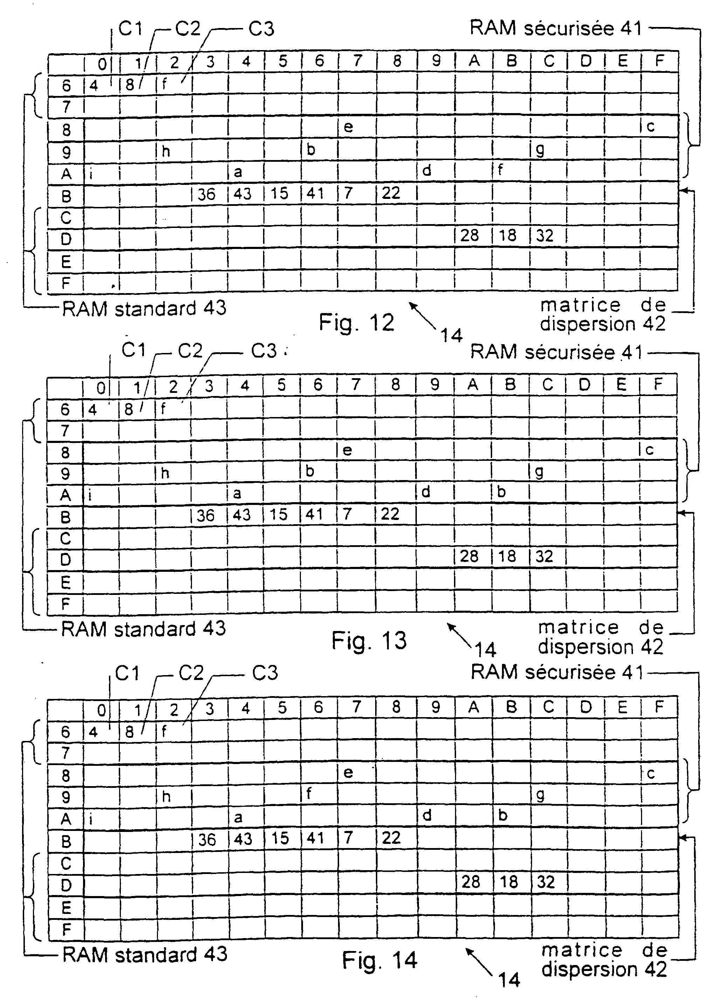

Une permutation des adresses étant intervenue en matrice de dispersion 44, il faut maintenant effectuer une permutation correspondante des données associées à ces adresses en mémoire RAM sécurisée 41. A l'étape 111 de la figure 11, on lit le contenu de la cellule de la mémoire RAM sécurisée 41 dont l'adresse logique est définie par le contenu de la cellule C1. La valeur de décalage logique 4 renvoie à la cellule B4 de la matrice de dispersion, laquelle contient le décalage physique 43: l'adresse correspondante en mémoire RAM sécurisée 41 est donc pRamSec + 43, correspondant à la cellule AB. A l'étape 112, le contenu de cette cellule est stocké dans la cellule C3, comme représenté sur la figure 12. A l'étape 113, le microprocesseur lit le contenu de la cellule de la mémoire RAM sécurisée 41 dont l'adresse est définie par le contenu de la cellule C2. La valeur 8 renvoie à la cellule B8 de la matrice de dispersion contenant le décalage physique 22 : l'adresse correspondante en mémoire RAM sécurisée 41 est donc pRamSec + 22, correspondant à la cellule 96, contenant la valeur b. A l'étape 114, cette valeur est stockée dans la cellule de la mémoire RAM sécurisée 41 dont le décalage logique est stocké dans la cellule C1 : le décalage logique 4 correspond an décalage physique 43, lequel désigne la cellule AB de la mémoire RAM sécurisée 41. Le résultat est représenté sur la figure 13. Enfin, à l'étape 115, le microprocesseur stocke le contenu f de la cellule C3 dans la cellule de la mémoire RAM sécurisée 41 ayant le décalage logique stocké dans la cellule C2: il s'agit de la cellule d'adresse 96. Le résultat apparaît sur la figure 14. En comparant les figures 12 et 14, on peut constater que les valeurs b,f ont bien été permutées.

On peut vérifier sur la figure 14 la correspondance entre les adresses permutées de la matrice de dispersion et les valeurs permutées de la mémoire RAM sécurisée 41. Par exemple, selon la figure 3, la valeur (f) a une adresse définie par le décalage logique 8 soit, sur la figure 14, le décalage physique 22. On peut constater que la valeur f se trouve bien dans la cellule 96 possédant ce décalage physique.

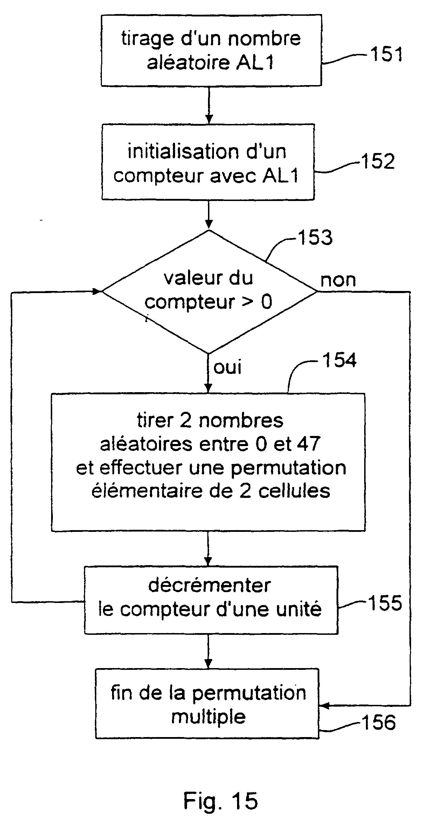

Dans la pratique, le microprocesseur effectuera, non pas une seule, mais un certain nombre de permutations élémentaires constituant une permutation dite « multiple », selon la procédure de la figure 15. A l'étape 151, le microprocesseur tire un nombre aléatoire AL1 : typiquement, ce nombre peut être compris par exemple entre 0 et 256. A l'étape 152, le microprocesseur initialise un compteur avec la valeur AL1. A l'étape 153, le microprocesseur vérifie que le compteur a une valeur positive. Dans l'affirmative, il effectue une permutation élémentaire selon la procédure des figures 7 et 11, en tirant deux nombres aléatoires compris entre 0 et 47. A l'étape 155, le microprocesseur décrémente le compteur d'une unité, puis il retourne à l'étape 153. Une fois que le compteur a atteint la valeur 0, il parvient à la fin de la permutation multiple , repérée en 156.

Le procédé de permutation multiple qui vient d'être décrit, ou procédé de régénération de la matrice de dispersion, sera déclenché à divers moments. Il le sera tout d'abord après chaque remise sous tension de la carte. Il le sera aussi au cours d'une session d'utilisation de la carte, à certains moments critiques, par exemple lorsque l'on traite une information sensible. Ainsi, le chargement du PIN (de l'anglais Personal Identification Number) en mémoire RAM sécurisée 41 suppose le transfert de huit octets vers cette mémoire : on décide de déclencher une régénération de la matrice de dispersion après chargement de chaque octet du PIN. Un autre exemple est celui où une anomalie est détectée dans un registre de sécurité de la carte. On rappelle qu'une carte inclut de façon connue en soi une pluralité de capteurs permettant de tester divers caractéristiques physiques de la carte, par exemple sa température, le taux de rayonnement auquel elle peut se trouver éventuellement soumis, la continuité électrique d'un écran de protection contre les agressions mécaniques, etc... L'état dans lequel se trouvent ces capteurs à un moment donné est enregistré dans ledit registre de sécurité. On peut décider de tester à certains moments critiques l'état du registre de sécurité, par exemple avant de traiter une information sensible et, si une anomalie est détectée, de déclencher une régénération de la matrice de dispersion.

Selon une variante de l'invention, la matrice de dispersion se trouve dans une mémoire de la carte ou du module de sécurité qui est différente de celle constituant la mémoire sécurisée. Ceci est particulièrement avantageux si l'on recherche à économiser la mémoire sécurisée. Par exemple, en référence à la figure 1, la matrice de dispersion pourrait être en mémoire non volatile 10.

On notera qu'un résultat avantageux de l'invention consiste en ce que le temps que met le microprocesseur pour avoir accès à l'une quelconque des informations stockées dans la mémoire RAM sécurisée 41 est constant. Cela est obtenu en associant les unités d'information à leurs adresses en utilisant une correspondance matricielle (correspondance entre les cellules de la mémoire RAM sécurisée 41 et celles de la matrice de dispersion ). Ceci empêche tout fraudeur, observant le microprocesseur, d'effectuer des distinctions entre les accès aux différentes unités d'information, distinctions qui auraient pu lui fournir des renseignements sur les informations manipulées.

## Revendications

1. Module de sécurité comprenant des moyens de traitement de l'information (9) et des moyens de stockage de l'information (10,14), **caractérisé en ce que** les moyens de traitement (9) comprennent :

   - des moyens pour définir, dans les moyens de stockage (10,14), une première zone mémoire (41) destinée à stocker des informations (a,b,c ; d,e,f), accessibles en désignant des adresses logiques (83,86) ;
   - des moyens pour définir, dans les moyens de stockage (10,14), une seconde zone mémoire (42) destinée à stocker des adresses physiques (AA,92) de ces informations définissant leur position dans la première zone mémoire (41), ces adresses physiques étant situées en une position qui est fonction des adresses logiques respectives des informations.

2. Procédé de stockage d'informations dans des moyens de stockage d'information d'un module de sécurité, **caractérisé en ce qu'**il comprend les étapes consistant à :

   - définir, dans les moyens de stockage (10,14), une première zone mémoire (41) destinée à stocker des informations (a,b,c; d,e,f), accessibles en désignant des adresses logiques (83,86) ;
   - définir, dans les moyens de stockage (10,14), une seconde zone mémoire (42) destinée à stocker des adresses physiques (AA,92) de ces informations définissant leur position dans la première zone mémoire (41), ces adresses physiques étant situées en une position qui est fonction des adresses logiques respectives des informations ;
   - stocker les informations dans la première zone mémoire (41) en une position qui est fonction de leurs adresses logiques respectives, et les adresses logiques (83,86) de ces informations dans la seconde zone mémoire (42) en une position qui est fonction de ces adresses logiques ; et
   - permuter deux à deux les adresses logiques (83,86) des unités d'information (a,b,c; d,e,f) dans la seconde zone mémoire (42) pour définir leurs adresses physiques et, après chaque permutation, permuter les deux unités d'information correspondantes dans la première zone mémoire (41 ), ou vice versa.

3. Procédé de stockage d'informations dans des moyens de stockage d'information d'un module de sécurité, **caractérisé en ce qu'**il comprend les étapes consistant à :

   - définir, dans les moyens de stockage (10,14), une première zone mémoire (41) destinée à stocker des informations (a,b,c ; d,e,f), accessibles en désignant des adresses logiques (83,86) ;
   - définir, dans les moyens de stockage (10,14), une seconde zone mémoire (42) destinée à stocker des adresses physiques (AA,92) de ces informations définissant leur position dans la première zone mémoire (41), ces adresses physiques étant situées en une position qui est fonction des adresses logiques respectives des informations ;
   - stocker aléatoirement dans la seconde zone mémoire (42) les adresses logiques (83,86) des informations pour définir des adresses physiques de ces informations ; et
   - stocker les informations dans la première zone mémoire (41) en une position qui est fonction de leurs adresses physiques respectives.

4. Procédé d'exploitation d'informations dans des moyens de stockage d'information d'un module de sécurité, dans lequel on a défini, dans les moyens de stockage (10,14), une première zone mémoire (41) destinée à stocker des informations (a,b,c; d,e,f), accessibles en désignant des adresses logiques (83,86) et on a défini, dans les moyens de stockage (10,14), une seconde zone mémoire (42) destinée à stocker des adresses physiques (83,86) de ces informations définissant leur position dans la première zone mémoire (41), ces adresses physiques étant situées en une position qui est fonction des adresses logiques respectives des informations, **caractérisé en ce qu'**il comprend l'étape consistant à accéder à toute information (a,b,c ; d,e,f) désignée par son adresse logique (83,86) en prélevant son adresse physique (AA,92) dans la seconde zone mémoire (42) par lecture du contenu de la seconde zone mémoire (42) en une position qui est fonction de ladite adresse logique.

5. Procédé d'exploitation selon la revendication 4, comprenant l'étape consistant à modifier périodiquement et de façon aléatoire la position des adresses physiques (AA, 92) des informations (a,b,c; d, e,f) dans la seconde zone mémoire (42), et à modifier de façon correspondante la position des unités d'information dans la première zone mémoire (41).

6. Procédé d'exploitation selon la revendication 5, dans lequel la modification périodique de la position des adresses physiques (AA,92) et des informations (a,b,c; d,e,f) est déclenchée lors du traitement d'une information sensible.

7. Procédé d'exploitation selon la revendication 5, consistant à permuter deux à deux les adresses physiques (AA, 92) des informations (a,b,c; d,e,f) dans la seconde zone mémoire (42) et, après chaque permutation, permuter les deux unités d'information correspondantes dans la première zone mémoire (41).

8. Procédé d'exploitation selon la revendication 4, dans lequel on stocke dans la première zone mémoire (41) des unités d'information (a,b,c) ayant une taille inférieure à une taille des informations (a,b,c,d,e,f), lesdites unités d'information étant accessibles en désignant lesdites adresses logiques (83,86) et étant stockées dans une position définie par lesdites adresses physiques (AA,92).

9. Procédé d'exploitation selon la revendication 8, dans lequel lesdits moyens de stockage comprennent plusieurs cellules (45,47) et chaque unité d'information a une taille telle qu'elle est stockée dans une seule cellule (47) de la première zone mémoire (41) et son adresse physique est stockée dans une seule cellule (48) de la seconde zone mémoire (42).

10. Produit de programme d'ordinateur pour un module de sécurité comprenant des moyens de traitement de l'information (9), **caractérisé en ce que** ledit module comprend

   - une première zone mémoire (41) destinée à stocker des informations (a,b,c ; d,e,f) accessibles en désignant des adresses logiques (83,86)
   - une seconde zone mémoire (42) destinée à stocker des adresses physiques (AA,92) de ces informations définissant leur position dans la première zone mémoire (4 1 ), ces adresses physiques étant situées en une position qui est fonction des adresses logiques respectives des informations,

   et **en ce que** le produit de programme d'ordinateur comprend un jeu d'instructions qui, lorsqu'il est exécuté sur ledit module, effectue les étapes suivantes :

   - stocker aléatoirement dans la seconde zone mémoire (42) les adresses logiques (83,86) des informations pour définir des adresses physiques de ces informations ; et
   - stocker les informations dans la première zone mémoire (41) en une position qui est fonction de leurs adresses physiques respectives.

11. Produit de programme d'ordinateur pour un module de sécurité comprenant des moyens de traitement de l'information (9), **caractérisé en ce que** ledit module comprend

   - une première zone mémoire (41) destinée à stocker des informations (a,b,c ; d,e,f) accessibles en désignant des adresses logiques (83,86)
   - une seconde zone mémoire (42) destinée à stocker des adresses physiques (AA,92) de ces informations définissant leur position dans la première zone mémoire (41), ces adresses physiques étant situées en une position qui est fonction des adresses logiques respectives des informations,

   et **en ce que** le produit de programme d'ordinateur comprend un jeu d'instructions qui, lorsqu'il est exécuté sur ledit module, effectue les étapes suivantes :

   - stocker les informations dans la première zone mémoire (41) en une position qui est fonction de leurs adresses logiques respectives, et les adresses logiques (83,86) de ces informations dans la seconde zone mémoire (42) en une position qui est fonction de ces adresses logiques ; et
   - permuter deux à deux les adresses logiques (83,86) des unités d'information (a,b,c ; d,e,f) dans la seconde zone mémoire (42) pour définir leurs adresses physiques et, après chaque permutation, permuter les deux unités d'information correspondantes dans la première zone mémoire (41), ou vice versa.

12. Produit de programme d'ordinateur pour un module de sécurité comprenant des moyens de traitement de l'information (9), **caractérisé en ce que** ledit module comprend

   - une première zone mémoire (41) destinée à stocker des informations (a,b,c ; d,e,f) accessibles en désignant des adresses logiques (83,86)
   - une seconde zone mémoire (42) destinée à stocker des adresses physiques (AA,92) de ces informations définissant leur position dans la première zone mémoire (41), ces adresses physiques étant situées en une position qui est fonction des adresses logiques respectives des informations,

   et **en ce que** le produit de programme d'ordinateur comprend un jeu d'instructions qui, lorsqu'il est exécuté sur ledit module, effectue l'étape suivante :

- accéder à toute information (a,b,c ; d,e,f) désignée par son adresse logique (83,86) en prélevant son adresse physique (AA,92) dans la seconde zone mémoire (42) par lecture du contenu de la seconde zone mémoire (42) en une position qui est fonction de ladite adresse logique.

## Claims

1. Security module comprising information processing means (9) and information storage means (10,14), **characterised in that** the processing means (9) comprise:

   - means to define, in the storage means (10,14), a first memory area (41) designed to store items of information (a,b,c; d,e,f) accessible by designating logical addresses (83,86);
   - means to define, in the storage means (10,14), a second memory area (42) designed to store physical addresses (AA,92) of these items of information defining their positions in the first memory area (41), these physical addresses being located at a position which depends on the respective logical addresses of the items of information.

2. Method to store items of information in information storage means of a security module, **characterised in that** it comprises the following steps:

   - define, in the storage means (10,14), a first memory area (41) designed to store items of information (a,b,c; d,e,f) accessible by designating logical addresses (83,86);
   - define, in the storage means (10,14), a second memory area (42) designed to store physical addresses (AA,92) of these items of information defining their positions in the first memory area (41), these physical addresses being located at a position which depends on the respective logical addresses of the items of information;
   - store the items of information in the first memory area (41) at a position which depends on their respective logical addresses, and the logical addresses (83,86) of these items of information in the second memory area (42) at a position which depends on these logical addresses; and
   - swap two at a time the logical addresses (83,86) of the items of information (a,b,c; d,e,f) in the second memory area (42) to define their physical addresses and, after each swap, swap the two corresponding items of information in the first memory area (41), or vice versa.

3. Method to store items of information in information storage means of a security module, **characterised in that** it comprises the following steps:

   - define, in the storage means (10,14), a first memory area (41) designed to store items of information (a,b,c; d,e,f) accessible by designating logical addresses (83,86);
   - define, in the storage means (10,14), a second memory area (42) designed to store physical addresses (AA,92) of these items of information defining their positions in the first memory area (41), these physical addresses being located at a position which depends on the respective logical addresses of the items of information;
   - store randomly in the second memory area (42) the logical addresses (83,86) of the items of information to define physical addresses of these items of information; and
   - store the items of information in the first memory area (41) at a position which depends on their respective physical addresses.

4. Method to process items of information in information storage means of a security module, in which we have defined, in the storage means (10,14), a first memory area (41) designed to store items of information (a,b,c; d,e,f), accessible by designating logical addresses (83,86) and we have defined, in the storage means (10,14), a second memory area (42) designed to store physical addresses (83,86) of these items of information defining their positions in the first memory area (41), these physical addresses being located at a position which depends on the respective logical addresses of the items of information, **characterised in that** it comprises the step which consists of accessing any item of information (a,b,c; d,e,f) designated by its logical address (83,86) by sampling its physical address (AA, 92) in the second memory area (42) by reading the content of the second memory area (42) at a position which depends on said logical address.

5. Processing method according to claim 4, comprising the step which consists of periodically and randomly modifying the position of the physical addresses (AA, 92) of the items of information (a,b,c; d,e,f) in the second memory area (42), and of modifying accordingly the position of the items of information in the first memory area (41).

6. Processing method according to claim 5, in which the periodic modification of the position of the physical addresses (AA,92) and of the items of information (a,b,c; d,e,f) is triggered when processing a sensitive item of information.

**7.** Processing method according to claim 5, which consists of swapping two at a time the physical addresses (AA, 92) of the items of information (a,b,c; d,e,f) in the second memory area (42) and, after each swap, of swapping the two corresponding items of information in the first memory area (41).

**8.** Processing method according to claim 4, in which we store in the first memory area (41) items of information (a,b,c) of size smaller than that of the items of information (a,b,c; d,e,f), said items of information being accessible by designating said logical addresses (83,86) and being stored in a position defined by said physical addresses (AA,92).

**9.** Processing method according to claim 8, in which said storage means comprise several cells (45,47) and each item of information has a size such that it is stored in a single cell (47) of the first memory area (41) and its physical address is stored in a single cell (48) of the second memory area (42).

**10.** Computer program product for a security module comprising information processing means (9), **characterised in that** said module comprises

- a first memory area (41) designed to store items of information (a,b,c; d,e,f) accessible by designating logical addresses (83,86)
- a second memory area (42) designed to store physical addresses (AA,92) of these items of information defining their positions in the first memory area (41), these physical addresses being located at a position which depends on the respective logical addresses of the items of information,

and **in that** the computer program product comprises an instruction set which, when it is executed on said module, performs the following steps:

- store randomly in the second memory area (42) the logical addresses (83,86) of the items of information to define physical addresses of these items of information; and
- store the items of information in the first memory area (41) at a position which depends on their respective physical addresses.

**11.** Computer program product for a security module comprising information processing means (9), **characterised in that** said module comprises

- a first memory area (41) designed to store items of information (a,b,c; d,e,f) accessible by designating logical addresses (83,86)
- a second memory area (42) designed to store physical addresses (AA,92) of these items of information defining their positions in the first memory area (41), these physical addresses being located at a position which depends on the respective logical addresses of the items of information,

and **in that** the computer program product comprises an instruction set which, when it is executed on said module, performs the following steps:

- store the items of information in the first memory area (41) at a position which depends on their respective logical addresses, and the logical addresses (83,86) of these items of information in the second memory area (42) at a position which depends on these logical addresses; and
- swap two at a time the logical addresses (83,86) of the items of information (a,b,c; d,e,f) in the second memory area (42) to define their physical addresses and, after each swap, swap the two corresponding items of information in the first memory area (41), or vice versa.

**12.** Computer program product for a security module comprising information processing means (9), **characterised in that** said module comprises

- a first memory area (41) designed to store items of information (a,b,c; d,e,f) accessible by designating logical addresses (83,86)
- a second memory area (42) designed to store physical addresses (AA,92) of these items of information defining their positions in the first memory area (41), these physical addresses being located at a position which depends on the respective logical addresses of the items of information,

and **in that** the computer program product comprises an instruction set which, when it is executed on said module, performs the following step:

- access any item of information (a,b,c; d,e,f) designated by its logical address (83,86) by sampling its physical address (AA,92) in the second memory area (42) by reading the content of the second memory area (42) at a position which depends on said logical address.

**Patentansprüche**

**1.** Sicherheitsmodul mit Datenverarbeitungsmittel (9) und Datenspeichermittel (10, 14), **dadurch gekennzeichnet, dass** die Datenverarbeitungsmittel (9) folgende Elemente umfassen:

- Mittel zum Definieren in den Speichermitteln (10, 14) einer ersten Speicherzone (41) zur Speicherung von Daten (a,b,c; d,e,f), die unter Angabe logischer Adressen (83, 86) zugänglich sind;

- Mittel zum Definieren in den Speichermitteln (10, 14) einer zweiten Speicherzone (42) zur Speicherung der physischen Adressen (AA, 92) dieser Daten, durch die ihre Position in der ersten Speicherzone (41) definiert wird, wobei sich diese physischen Adressen an einer Stelle befinden, die von den jeweiligen logischen Adressen der Daten abhängig ist.

2. Datenspeicherverfahren in Datenspeichermittel eines Sicherheitsmoduls, **dadurch gekennzeichnet, dass** es folgende Schritte umfasst, die in folgendem bestehen:

- Definieren in den Speichermitteln (10, 14) einer ersten Speicherzone (41) zur Speicherung von Daten (a,b,c; d,e,f), die unter Angabe logischer Adressen (83, 86) zugänglich sind;

- Definieren in den Speichermitteln (10, 14) einer zweiten Speicherzone (42) zur Speicherung der physischen Adressen (AA, 92) dieser Daten, durch die ihre Position in der ersten Speicherzone (41) definiert wird, wobei sich diese physischen Adressen an einer Stelle befinden, die von den jeweiligen logischen Adressen der Daten abhängt;

- Speichern der Daten in der ersten Speicherzone (41) an einer Stelle, die von deren jeweiligen logischen Adressen abhängt, sowie der logischen Adressen (83, 86) dieser Daten in der zweiten Speicherzone (42) an einer Stelle, die von diesen logischen Adressen abhängt; und

- Paarweises Umwandeln der logischen Adressen (83, 86) der Dateneinheiten (a,b,c; d,e,f) in der zweiten Speicherzone (42) zur Definition ihrer physischen Adressen und nach jeder Umwandlung Umwandeln der beiden entsprechenden Dateneinheiten in der ersten Speicherzone (41) oder umgekehrt.

3. Datenspeicherverfahren in Datenspeichermittel eines Sicherheitsmoduls, **dadurch gekennzeichnet, dass** es folgende Schritte umfasst, die in folgendem bestehen:

- Definieren in den Speichermitteln (10, 14) einer ersten Speicherzone (41) zur Speicherung von Daten (a,b,c; d,e,f), die unter Angabe logischer Adressen (83, 86) zugänglich sind;

- Definieren in den Speichermitteln (10, 14) einer zweiten Speicherzone (42) zur Speicherung der physischen Adressen (AA, 92) dieser Daten, durch die ihre Position in der ersten Speicherzone (41) definiert wird, wobei sich diese physischen Adressen an einer Stelle befinden, die von den jeweiligen logischen Adressen der Daten abhängt;

- Zufälliges Speichern in der zweiten Speicherzone (42) der logischen Adressen (83, 86) der Daten zur Definition der physischen Adressen dieser Daten; und

- Speichern der Daten in der ersten Speicherzone (41) an einer Stelle, die von deren jeweiligen physischen Adressen abhängt.

4. Datenverarbeitungsverfahren in Datenspeichermittel eines Sicherheitsmoduls, bei dem in den Speichermitteln (10, 14) eine erste Speicherzone (41) zur Speicherung von Daten (a,b,c; d,e,f), die unter Angabe logischer Adressen (83, 86) zugänglich sind, definiert wurde und in den Speichermitteln (10, 14) eine zweite Speicherzone (42) definiert wurde zur Speicherung der physischen Adressen (83, 86) dieser Daten, durch die ihre Position in der ersten Speicherzone (41) definiert wird, wobei sich diese physischen Adressen an einer Stelle befinden, die von den jeweiligen logischen Adressen der Daten abhängt, **dadurch gekennzeichnet, dass** es den Schritt umfasst, der darin besteht, durch Ablesen des Inhalts der zweiten Speicherzone (42) an einer Stelle, die von der besagten logischen Adresse abhängt, deren physische Adresse (AA,92) in der zweiten Speicherzone (42) zu entnehmen und dadurch zu jeder durch ihre logische Adresse (83,86) bezeichnete Information (a,b,c; d,e,f) Zugriff zu haben.

5. Verarbeitungsverfahren nach Anspruch 4, das den Schritt umfasst, der in der regelmäßigen und zufälligen Änderung der Position der physischen Adressen (AA, 92) der Daten (a,b,c; d,e,f) in der zweiten Speicherzone (42) und in der entsprechenden Änderung der Position der Dateneinheiten in der ersten Speicherzone (41) besteht.

6. Verarbeitungsverfahren nach Anspruch 5, bei dem die regelmäßige Änderung der Position der physischen Adressen (AA, 92) und der Daten (a,b,c; d, e,f) während der Verarbeitung einer sensiblen Information ausgelöst wird.

7. Verarbeitungsverfahren nach Anspruch 5, das darin besteht, paarweise die physischen Adressen (AA, 92) der Daten (a,b,c; d,e,f) in der zweiten Speicherzone (42) umzuwandeln und nach jeder Umwandlung die beiden entsprechenden Dateneinheiten in der ersten Speicherzone (41) umzuwandeln.

8. Verarbeitungsverfahren nach Anspruch 4, bei dem in der ersten Speicherzone (41) Dateneinheiten (a, b,c) gespeichert werden, die kleiner sind als die Daten (a,b,c; d,e,f), wobei besagte Dateneinheiten unter Angabe besagter logischer Adressen (83,86) zugänglich sind und an einer Stelle gespeichert werden, die durch die besagten physischen Adressen (AA, 92) definiert wird.

9. Verarbeitungsverfahren nach Anspruch 8, bei dem besagte Speichermittel mehrere Zellen (45,47) umfassen und jede Dateneinheit eine derartige Größe aufweist, dass sie in einer einzigen Zelle (47) der ersten Speicherzone (41) gespeichert ist und ihre physische Adresse in einer einzigen Zelle (48) der zweiten Speicherzone (42) gespeichert ist.

10. Computerprogrammprodukt für ein Sicherheitsmodul mit Datenverarbeitungsmitteln (9), **dadurch gekennzeichnet, dass** besagtes Modul folgende Elemente umfasst:

   - eine erste Speicherzone (41) zum Speichern von Daten (a,b,c; d,e,f), die unter Angabe logischer Adressen (83,86) zugänglich sind
   - eine zweite Speicherzone (42) zum Speichern der physischen Adressen (AA,92) dieser Daten, durch die ihre Position in der ersten Speicherzone (41) definiert wird, wobei sich diese physischen Adressen an einer Stelle befinden, die von den jeweiligen logischen Adressen der Daten abhängt,

   und dadurch, dass das Computerprogrammprodukt eine Befehlsreihe umfasst, die bei deren Ausführung auf besagtem Modul folgende Schritte durchführt:

   - zufälliges Speichern in der zweiten Speicherzone (42) der logischen Adressen (83,86) der Daten, um die physischen Adressen dieser Daten zu definieren; und
   - Speichern der Daten in der ersten Speicherzone (41) an einer Stelle, die von deren jeweiligen physischen Adressen abhängt.

11. Computerprogrammprodukt für ein Sicherheitsmodul mit Datenverarbeitungsmitteln (9), **dadurch gekennzeichnet, dass** besagtes Modul folgende Elemente umfasst:

   - eine erste Speicherzone (41) zum Speichern von Daten (a,b,c; d,e,f), die unter Angabe logischer Adressen (83,86) zugänglich sind
   - eine zweite Speicherzone (42) zum Speichern der physischen Adressen (AA,92) dieser Daten, durch die ihre Position in der ersten Speicherzone (41) definiert wird, wobei sich diese physischen Adressen an einer Stelle befinden, die von den jeweiligen logischen Adressen der Daten abhängt,

   und dadurch, dass das Computerprogrammprodukt eine Befehlsreihe umfasst, die bei deren Ausführung auf besagtem Modul folgende Schritte durchführt:

   - Speichern der Daten in der ersten Speicherzone (41) an einer Stelle, die von deren jeweiligen logischen Adressen abhängt, sowie der logischen Adressen (83, 86) dieser Daten in der zweiten Speicherzone (42) an einer Stelle, die von diesen logischen Adressen abhängt; und
   - Paarweises Umwandeln der logischen Adressen (83, 86) der Dateneinheiten (a,b,c; d,e,f) in der zweiten Speicherzone (42), um deren physische Adressen zu definieren und nach jeder Umwandlung Umwandeln der beiden entsprechenden Dateneinheiten in der ersten Speicherzone (41) oder umgekehrt.

12. Computerprogrammprodukt für ein Sicherheitsmodul mit Datenverarbeitungsmitteln (9), **dadurch gekennzeichnet, dass** besagtes Modul folgende Elemente umfasst:

   - eine erste Speicherzone (41) zum Speichern von Daten (a,b,c; d,e,f), die unter Angabe logischer Adressen (83,86) zugänglich sind
   - eine zweite Speicherzone (42) zum Speichern der physischen Adressen (AA,92) dieser Daten, durch die ihre Position in der ersten Speicherzone (41) definiert wird, wobei sich diese physischen Adressen an einer Stelle befinden, die von den jeweiligen logischen Adressen der Daten abhängt,

   und dadurch, dass das Computerprogrammprodukt eine Befehlsreihe umfasst, die bei deren Ausführung auf besagtem Modul folgenden Schritt durchführt:

   - Zugang zu jeder durch ihre logische Adresse (83,86) bezeichnete Information (a,b,c; d,e,f), indem durch Ablesen des Inhalts der zweiten Speicherzone (42) an einer Stelle, die von der besagten logischen Adresse abhängt, deren physische Adresse (AA,92) in der zweiten Speicherzone (42) entnommen wird.

ROM  RAM

7  µp

20  2

5  13  µp  9

RAM
14
11
12

8  mémoire non volatile 10

Fig.1

ROM  RAM  9  µp

RAM
14

7  µp  11
12

2  15  mémoire non volatile 10

16

Fig.2

RAM sécurisée 41

| | 0 | 1 | 2 | 3 | 4 | 5 | 6 | 7 | 8 | 9 | A | B | C | D | E | F |
|---|---|---|---|---|---|---|---|---|---|---|---|---|---|---|---|---|
| 6 | | | | | | | | | | | | | | | | |
| 7 | | | | | | | | | | | | | | | | |
| 8 | | | | a | b | c | d | e | f | | | | | | | |
| 9 | | | | | | | | | | | | | | | | |
| A | | | | | | | | | | | g | h | i | | | |
| B | | | | | | | | | | | | | | | | |
| C | | | | | | | | | | | | | | | | |
| D | | | | | | | | | | | | | | | | |
| E | | | | | | | | | | | | | | | | |
| F | | | | | | | | | | | | | | | | |

RAM standard 43

matrice de dispersion 42

**Fig. 3** 14

RAM sécurisée 41

| | 0 | 1 | 2 | 3 | 4 | 5 | 6 | 7 | 8 | 9 | A | B | C | D | E | F |
|---|---|---|---|---|---|---|---|---|---|---|---|---|---|---|---|---|
| 6 | | | | | | | | | | | | | | | | |
| 7 | | | | | | | | | | | | | | | | |
| 8 | | | | | | | | | | | | | | | | |
| 9 | | | d | e | f | | | | g | h | i | | | | | |
| A | | | | | | | | | | | a | b | c | | | |
| B | | AA | 92 | | | | | | | | | | | | 98 | |
| C | | | | | | | | | | | | | | | | |
| D | | | | | | | | | | | | | | | | |
| E | | | | | | | | | | | | | | | | |
| F | | | | | | | | | | | | | | | | |

RAM standard 43

matrice de dispersion 42

**Fig. 4** 14

RAM sécurisée 41

| | 0 | 1 | 2 | 3 | 4 | 5 | 6 | 7 | 8 | 9 | A | B | C | D | E | F |
|---|---|---|---|---|---|---|---|---|---|---|---|---|---|---|---|---|
| 6 | | | | | | | | | | | | | | | | |
| 7 | | | | | | | | | | | | | | | | |
| 8 | | | | | | | e | | | | | | | | c | |
| 9 | | | h | | | | b | | | | | g | | | | |
| A | i | | | | a | | | | d | | | f | | | | |
| B | | | A4 | 96 | 8F | A9 | 87 | AB | | | | | | | | |
| C | | | | | | | | | | | | | | | | |
| D | | | | | | | | | | | 9C | 92 | A0 | | | |
| E | | | | | | | | | | | | | | | | |
| F | | | | | | | | | | | | | | | | |

RAM standard 43

matrice de dispersion 42

**Fig. 5** 14

tirage de 2 nombres aléatoires entre 0 et 47 — 71

stockage de ces deux nombres dans cellules C1 et C2 — 72

stockage dans cellule C3 du contenu de la cellule matrice repérée par C1 — 73

stockage du contenu de la cellule matrice repérée par C2 dans cellule repérée par C1 — 74

stockage du contenu de C3 dans cellule matrice repérée par C2 — 75

**Fig. 7**

111 — lecture de la cellule RAM sécurisée de décalage logique stocké dans C1

112 — stockage dans C3

113 — lecture de la cellule RAM sécurisée de décalage logique stocké dans C2

114 — stockage de la cellule RAM sécurisée de décalage logique stocké dans C1

115 — stockage du contenu de C3 dans la cellule RAM sécurisée de décalage logique C2

**Fig. 11**

|   | 0 | 1 | 2 | 3 | 4 | 5 | 6 | 7 | 8 | 9 | A | B | C | D | E | F |
|---|---|---|---|---|---|---|---|---|---|---|---|---|---|---|---|---|
| 6 |   |   |   |   |   |   |   |   |   |   |   |   |   |   |   |   |
| 7 |   |   |   |   |   |   |   |   |   |   |   |   |   |   |   |   |
| 8 |   |   |   |   |   |   |   |   |   |   |   |   |   |   |   |   |
| 9 |   |   |   |   |   |   |   |   |   |   |   |   |   |   |   |   |
| A |   |   |   |   |   |   |   |   |   |   |   |   |   |   |   |   |
| B |   |   |   |   |   |   |   |   |   |   |   |   |   |   |   |   |
| C |   |   |   |   |   |   |   |   |   |   |   |   |   |   |   |   |
| D |   |   |   |   |   |   |   |   |   |   |   |   |   |   |   |   |
| E |   |   |   |   |   |   |   |   |   |   |   |   |   |   |   |   |
| F |   |   |   |   |   |   |   |   |   |   |   |   |   |   |   |   |

} RAM standard 43

} RAM sécurisée 41

} matrice de dispersion 44

} RAM standard 43

45 — 46
47 — 48

**Fig. 6**

14

**Fig. 8**

C1 — C2 — C3    RAM sécurisée 41

|   | 0 | 1 | 2 | 3 | 4 | 5 | 6 | 7 | 8 | 9 | A | B | C | D | E | F |
|---|---|---|---|---|---|---|---|---|---|---|---|---|---|---|---|---|
| 6 | 4 | 8 | 22 |  |  |  |  |  |  |  |  |  |  |  |  |  |
| 7 |  |  |  |  |  |  |  |  |  |  |  |  |  |  |  |  |
| 8 |  |  |  |  |  |  |  | e |  |  |  |  |  |  |  | c |
| 9 |  |  | h |  |  |  | b |  |  |  |  | g |  |  |  |  |
| A | i |  |  | a |  |  |  |  | d |  | f |  |  |  |  |  |
| B |  |  |  | 36 | 22 | 15 | 41 | 7 | 43 |  |  |  |  |  |  |  |
| C |  |  |  |  |  |  |  |  |  |  |  |  |  |  |  |  |
| D |  |  |  |  |  |  |  |  |  |  | 28 | 18 | 32 |  |  |  |
| E |  |  |  |  |  |  |  |  |  |  |  |  |  |  |  |  |
| F |  |  |  |  |  |  |  |  |  |  |  |  |  |  |  |  |

RAM standard 43    14    matrice de dispersion 42

**Fig. 9**

C1 — C2 — C3    RAM sécurisée 41

|   | 0 | 1 | 2 | 3 | 4 | 5 | 6 | 7 | 8 | 9 | A | B | C | D | E | F |
|---|---|---|---|---|---|---|---|---|---|---|---|---|---|---|---|---|
| 6 | 4 | 8 | 22 |  |  |  |  |  |  |  |  |  |  |  |  |  |
| 7 |  |  |  |  |  |  |  |  |  |  |  |  |  |  |  |  |
| 8 |  |  |  |  |  |  |  | e |  |  |  |  |  |  |  | c |
| 9 |  |  | h |  |  |  | b |  |  |  |  | g |  |  |  |  |
| A | i |  |  | a |  |  |  |  | d |  | f |  |  |  |  |  |
| B |  |  |  | 36 | 43 | 15 | 41 | 7 | 43 |  |  |  |  |  |  |  |
| C |  |  |  |  |  |  |  |  |  |  |  |  |  |  |  |  |
| D |  |  |  |  |  |  |  |  |  |  | 28 | 18 | 32 |  |  |  |
| E |  |  |  |  |  |  |  |  |  |  |  |  |  |  |  |  |
| F |  |  |  |  |  |  |  |  |  |  |  |  |  |  |  |  |

RAM standard 43    14    matrice de dispersion 42

**Fig. 10**

C1 — C2 — C3    RAM sécurisée 41

|   | 0 | 1 | 2 | 3 | 4 | 5 | 6 | 7 | 8 | 9 | A | B | C | D | E | F |
|---|---|---|---|---|---|---|---|---|---|---|---|---|---|---|---|---|
| 6 | 4 | 8 | 22 |  |  |  |  |  |  |  |  |  |  |  |  |  |
| 7 |  |  |  |  |  |  |  |  |  |  |  |  |  |  |  |  |
| 8 |  |  |  |  |  |  |  | e |  |  |  |  |  |  |  | c |
| 9 |  |  | h |  |  |  | b |  |  |  |  | g |  |  |  |  |
| A | i |  |  | a |  |  |  |  | d |  | f |  |  |  |  |  |
| B |  |  |  | 36 | 43 | 15 | 41 | 7 | 22 |  |  |  |  |  |  |  |
| C |  |  |  |  |  |  |  |  |  |  |  |  |  |  |  |  |
| D |  |  |  |  |  |  |  |  |  |  | 28 | 18 | 32 |  |  |  |
| E |  |  |  |  |  |  |  |  |  |  |  |  |  |  |  |  |
| F |  |  |  |  |  |  |  |  |  |  |  |  |  |  |  |  |

RAM standard 43    14    matrice de dispersion 42

C1  C2  C3                                                   RAM sécurisée 41

|   | 0 | 1 | 2 | 3 | 4 | 5 | 6 | 7 | 8 | 9 | A | B | C | D | E | F |
|---|---|---|---|---|---|---|---|---|---|---|---|---|---|---|---|---|
| 6 | 4 | 8 | f |   |   |   |   |   |   |   |   |   |   |   |   |   |
| 7 |   |   |   |   |   |   |   |   |   |   |   |   |   |   |   |   |
| 8 |   |   |   |   |   |   |   | e |   |   |   |   |   |   |   | c |
| 9 |   | h |   |   |   | b |   |   |   |   |   | g |   |   |   |   |
| A | i |   |   | a |   |   |   |   |   | d | f |   |   |   |   |   |
| B |   |   |   | 36 | 43 | 15 | 41 | 7 | 22 |   |   |   |   |   |   |   |
| C |   |   |   |   |   |   |   |   |   |   |   |   |   |   |   |   |
| D |   |   |   |   |   |   |   |   |   |   | 28 | 18 | 32 |   |   |   |
| E |   |   |   |   |   |   |   |   |   |   |   |   |   |   |   |   |
| F |   |   |   |   |   |   |   |   |   |   |   |   |   |   |   |   |

RAM standard 43                Fig. 12        14        matrice de dispersion 42

C1  C2  C3                                                   RAM sécurisée 41

|   | 0 | 1 | 2 | 3 | 4 | 5 | 6 | 7 | 8 | 9 | A | B | C | D | E | F |
|---|---|---|---|---|---|---|---|---|---|---|---|---|---|---|---|---|
| 6 | 4 | 8 | f |   |   |   |   |   |   |   |   |   |   |   |   |   |
| 7 |   |   |   |   |   |   |   |   |   |   |   |   |   |   |   |   |
| 8 |   |   |   |   |   |   |   | e |   |   |   |   |   |   |   | c |
| 9 |   | h |   |   |   | b |   |   |   |   |   | g |   |   |   |   |
| A | i |   |   | a |   |   |   |   |   | d | b |   |   |   |   |   |
| B |   |   |   | 36 | 43 | 15 | 41 | 7 | 22 |   |   |   |   |   |   |   |
| C |   |   |   |   |   |   |   |   |   |   |   |   |   |   |   |   |
| D |   |   |   |   |   |   |   |   |   |   | 28 | 18 | 32 |   |   |   |
| E |   |   |   |   |   |   |   |   |   |   |   |   |   |   |   |   |
| F |   |   |   |   |   |   |   |   |   |   |   |   |   |   |   |   |

RAM standard 43                Fig. 13        14        matrice de dispersion 42

C1  C2  C3                                                   RAM sécurisée 41

|   | 0 | 1 | 2 | 3 | 4 | 5 | 6 | 7 | 8 | 9 | A | B | C | D | E | F |
|---|---|---|---|---|---|---|---|---|---|---|---|---|---|---|---|---|
| 6 | 4 | 8 | f |   |   |   |   |   |   |   |   |   |   |   |   |   |
| 7 |   |   |   |   |   |   |   |   |   |   |   |   |   |   |   |   |
| 8 |   |   |   |   |   |   |   | e |   |   |   |   |   |   |   | c |
| 9 |   | h |   |   |   | f |   |   |   |   |   | g |   |   |   |   |
| A | i |   |   | a |   |   |   |   |   | d | b |   |   |   |   |   |
| B |   |   |   | 36 | 43 | 15 | 41 | 7 | 22 |   |   |   |   |   |   |   |
| C |   |   |   |   |   |   |   |   |   |   |   |   |   |   |   |   |
| D |   |   |   |   |   |   |   |   |   |   | 28 | 18 | 32 |   |   |   |
| E |   |   |   |   |   |   |   |   |   |   |   |   |   |   |   |   |
| F |   |   |   |   |   |   |   |   |   |   |   |   |   |   |   |   |

RAM standard 43                Fig. 14        14        matrice de dispersion 42

tirage d'un nombre
aléatoire AL1 — 151

initialisation d'un
compteur avec AL1 — 152

valeur du
compteur > 0 — 153

non

oui — 154

tirer 2 nombres
aléatoires entre 0 et 47
et effectuer une permutation
élémentaire de 2 cellules

décrémenter
le compteur d'une unité — 155

fin de la permutation
multiple
— 156

Fig. 15